# EUROPEAN PATENT APPLICATION

(11) **EP 2 677 205 A1**
(43) Date of publication of application: **25.12.2013**
(21) Application number: 13173197.8
(22) Date of filing: 21.06.2013
(51) Int. Cl.: F16H 55/30

(54) **Anti-detachment chainwheel having forced recessed face at chain tooth root portion**

(30) Priority: 21.06.2012 US 201213529080
(71) Applicant: Yang, Tai-Her, Si-Hu Town Dzan-Hwa (TW)
(72) Inventor: Yang, Tai-Her, Si-Hu Town Dzan-Hwa (TW)
(74) Representative: Wright, Howard Hugh Burnby

(57) **Abstract**

The present invention provides a novel anti-detachment chainwheel having forced recessed face at chain tooth root portion, in which a chain roller (110) sleeved on a chain connecting pivot shaft (109) can be tightened engaged at a forced recessed face at chain tooth root portion (104) while the chainwheel being driven by a chain, thereby improving the shortage of the chain being easily detached from the chainwheel.

## Description

### BACKGROUND OF THE INVENTION

### (a) Field of the Invention

The present invention provides a novel anti-detachment chainwheel having forced recessed face at chain tooth root portion, in which a chain roller (110) sleeved on a chain connecting pivot shaft (109) can be tightened engaged at a forced recessed face at chain tooth root portion (104) while the chainwheel being driven by a chain, thereby improving the shortage of the chain being easily detached from the chainwheel; the anti-detachment chainwheel having forced recessed face at chain tooth root portion provided by the present invention includes unidirectional transmission and bidirectional transmission structures.

### (b) Description of the Prior Art

A conventional chainwheel is often utilized for bidirectional forced transmission, and gear teeth are formed in a symmetrical structure; for smoothly guiding the chain into the chainwheel, a symmetrical chevron angled tooth face (103) having a tooth peak (105) at outer side and a wider chain tooth root portion at inner side has to be formed between the tooth shape and the chain roller (110) sleeved on a chain connecting pivot shaft (109) installed between lateral connecting sheets at each segment of the chain; however, one major shortage thereof is that when the chainwheel is driven by the chain, the oblique face formed on the chain tooth has a constant tendency of forcing the chainwheel to be outwardly detached, especially when less quantity of chain tooth being engaged with the chain, or when the chain being driven to swing towards the centrifugal direction under the situation of high speed transmission and altering load, the chain is even more likely to be detached.

### SUMMARY OF THE INVENTION

The present invention provides a novel anti-detachment chainwheel having forced recessed face at chain tooth root portion, in which a chain roller (110) sleeved on a chain connecting pivot shaft (109) can be tightened engaged at a forced recessed face at chain tooth root portion (104) while the chainwheel being driven by a chain, thereby improving the shortage of the chain being easily detached from the chainwheel.

According to a second aspect of the present invention, a chainwheel comprises a plurality of teeth, each tooth extending from a tooth root portion to a tooth peak (105) and having a pair of angled tooth faces (103); wherein at least one of the tooth faces (103) of each tooth has a recess (104) at the tooth root portion of the same side for receiving a chain roller.

Preferably, the recess (104) in each chain tooth root portion increases the steepness of the tooth face (103) and can even form an undercut.

### BRIEF DESCRIPTION OF THE DRAWINGS

FIG. 1 is a schematic structural view showing the chain tooth of a conventional chainwheel.
FIG. 2 is a side view showing a conventional chain structure.
FIG. 3 is a front view showing the conventional chain structure.
FIG. 4 is a schematic structural view illustrating the tooth shape of a unidirectional transmission anti-detachment chainwheel composed of a right circular gear plate and formed with a forced recessed face at chain tooth root portion (104), according to the present invention.
FIG. 5 is a schematic structural view illustrating the tooth shape of a bidirectional transmission anti-detachment chainwheel composed of a right circular gear plate and formed with a forced recessed face at chain tooth root portion (104), according to the present invention.
FIG. 6 is a schematic structural view illustrating the tooth shape of a unidirectional transmission anti-detachment chainwheel composed of an eccentric circular gear plate and formed with a forced recessed face at chain tooth root portion (104), according to the present invention.
FIG. 7 is a schematic structural view illustrating the tooth shape of a bidirectional transmission anti-detachment chainwheel composed of an eccentric circular gear plate and formed with a forced recessed face at chain tooth root portion (104), according to the present invention.
FIG 8 is a schematic structural view illustrating the tooth shape of a unidirectional transmission anti-detachment chainwheel composed of an oval gear plate and formed with a forced recessed face at chain tooth root portion (104), according to the present invention.
FIG. 9 is a schematic structural view illustrating the tooth shape of a bidirectional transmission anti-detachment chainwheel composed of an oval gear plate and formed with a forced recessed face at chain tooth root portion (104), according to the present invention.

### DESCRIPTION OF MAIN COMPONENT SYMBOLS

- 101 :: Right circular gear plate
- 102 :: Rotation central interface
- 103 :: Symmetrical chevron angled tooth face
- 104 :: Forced recessed face at chain tooth root portion
- 105 :: Tooth peak
- 106 :: Chain
- 107 :: Eccentric circular gear plate
- 108 :: Oval gear plate
- 109 :: Chain connecting pivot shaft
- 110 :: Chain roller

### DETAILED DESCRIPTION OF THE PREFERRED EMBODIMENTS

A conventional chainwheel is often utilized for bidirectional forced transmission, and gear teeth are formed in a symmetrical structure; for smoothly guiding the chain into the chainwheel, a symmetrical chevron angled tooth face (103) having a tooth peak (105) at outer side and a wider chain tooth root portion at inner side has to be formed between the tooth shape and the chain roller (110) sleeved on a chain connecting pivot shaft (109) installed between lateral connecting sheets at each segment of the chain; however, one major shortage thereof is that when the chainwheel is driven by the chain, the oblique face formed on the chain tooth has a constant tendency of forcing the chainwheel to be outwardly detached, especially when less quantity of chain tooth being engaged with the chain, or when the chain being driven to swing towards the centrifugal direction under the situation of high speed transmission and altering load, the chain is even more likely to be detached;

The present invention provides a novel anti-detachment chainwheel having forced recessed face at chain tooth root portion, in which a chain roller (110) sleeved on a chain connecting pivot shaft (109) can be tightened engaged at a forced recessed face at chain tooth root portion (104) while the chainwheel being driven by a chain, thereby improving the shortage of the chain being easily detached from the chainwheel; the anti-detachment chainwheel having forced recessed face at chain tooth root portion provided by the present invention includes unidirectional transmission and bidirectional transmission structures, illustrated as followings:

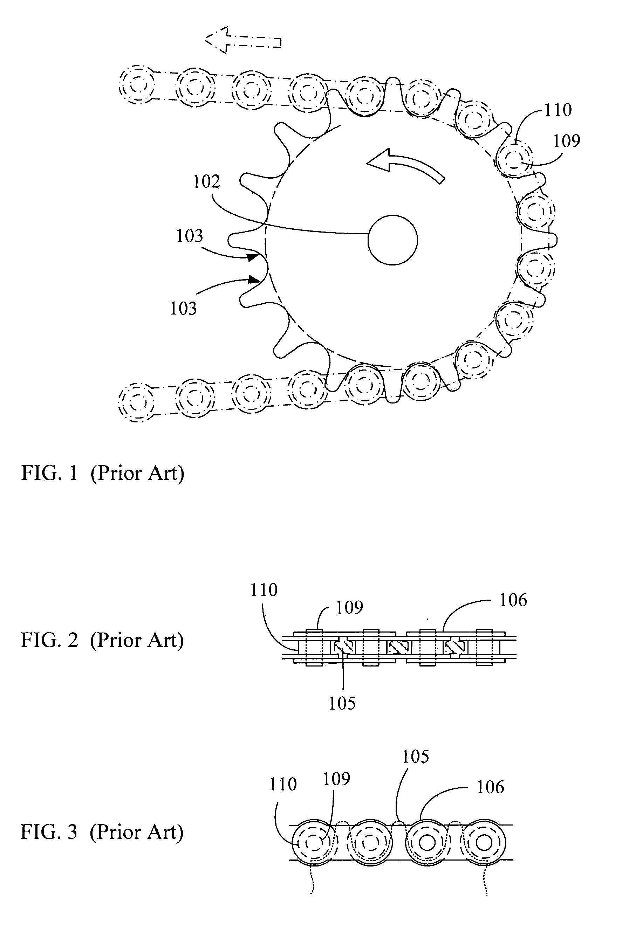

FIG. 1 is a schematic structural view showing the chain tooth of a conventional chainwheel;
FIG. 2 is a side view showing a conventional chain structure;
FIG. 3 is a front view showing the conventional chain structure;

As shown in FIG. I, FIG 2 and FIG 3, for smoothly guiding the chain (106) into the chainwheel through the chain tooth at the outer periphery of a conventional chainwheel during transmission, a symmetrical chevron angled tooth face (103) having a tooth peak (105) at outer side and a wider chain tooth root portion at inner side has to be formed between the tooth shape and the chain roller (110) sleeved on a chain connecting pivot shaft (109) installed between lateral connecting sheets at each segment of the chain; one major shortage thereof is that when the chainwheel is driven by the chain, the oblique face formed on the chain tooth has a constant tendency of forcing the chainwheel to be outwardly detached, especially when less quantity of chain tooth being engaged with the chain, or when the chain being driven to swing towards the centrifugal direction under the situation of high speed transmission and altering load, the chain is even more likely to be detached.

For improving the mentioned shortage, the present invention provides a novel anti-detachment chainwheel having forced recessed face at chain tooth root portion;

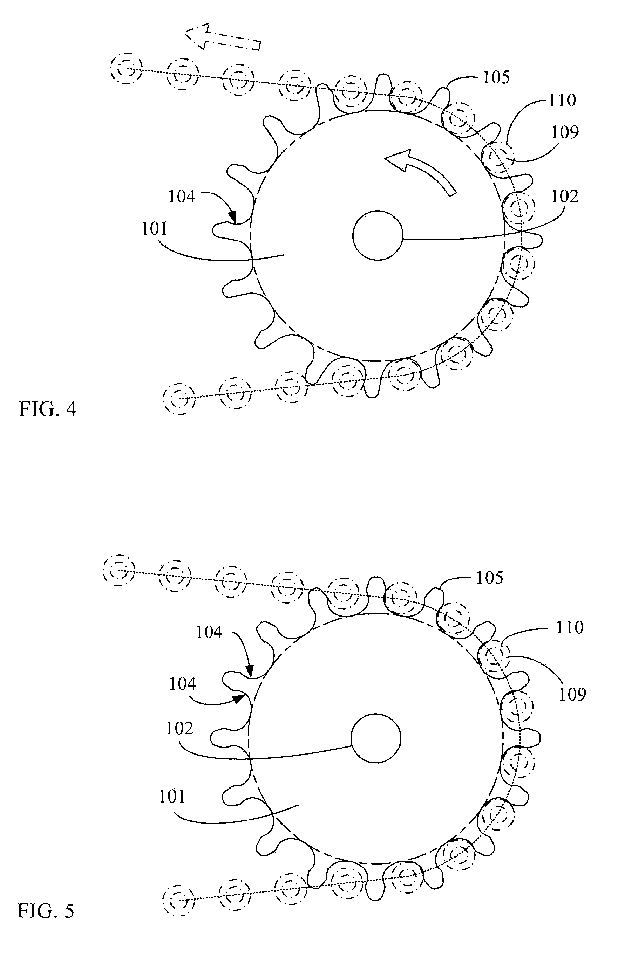

FIG. 4 is a schematic structural view illustrating the tooth shape of a unidirectional transmission anti-detachment chainwheel composed of a right circular gear plate and formed with a forced recessed face at chain tooth root portion (104), according to the present invention;

As shown in FIG. 4, it mainly consists of:
-- right circular gear plate (101): the periphery thereof is formed with chain teeth, the center thereof is formed with a mechanism in an aperture or shaft shape or chainwheel teeth having its outer circumference served for transmission for performing right circular rotation thereby forming a rotation central interface (102), one main characteristic thereof is that a root is formed along the tooth peak (105) of chainwheel tooth and inwardly recessed as a chevron angled face, wherein one root portion on the face along the transmission forcing is formed with a forced recessed face at chain tooth root portion (104), thereby coupling the chain roller (110) sleeved on the chain connecting pivot shaft (109) to be tightly engaged at the forced recessed face at chain tooth root portion.

FIG. 5 is a schematic structural view illustrating the tooth shape of a bidirectional transmission anti-detachment chainwheel composed of a right circular gear plate and formed with a forced recessed face at chain tooth root portion (104), according to the present invention;

As shown in FIG 5, it mainly consists of:
-- right circular gear plate (101): the periphery thereof is formed with chain teeth, the center thereof is formed with a mechanism in an aperture or shaft shape or chainwheel teeth having its outer circumference served for transmission for performing right circular rotation thereby forming a rotation central interface (102), one main characteristic thereof is that a root is formed along the tooth peak (105) of chainwheel tooth and inwardly recessed as a chevron angled face, wherein two root portions on the face along the transmission forcing are respectively formed with a forced recessed face at chain tooth root portion (104), thereby coupling the chain roller (110) sleeved on the chain connecting pivot shaft (109) to be tightly engaged at the forced recessed face at chain tooth root portion.

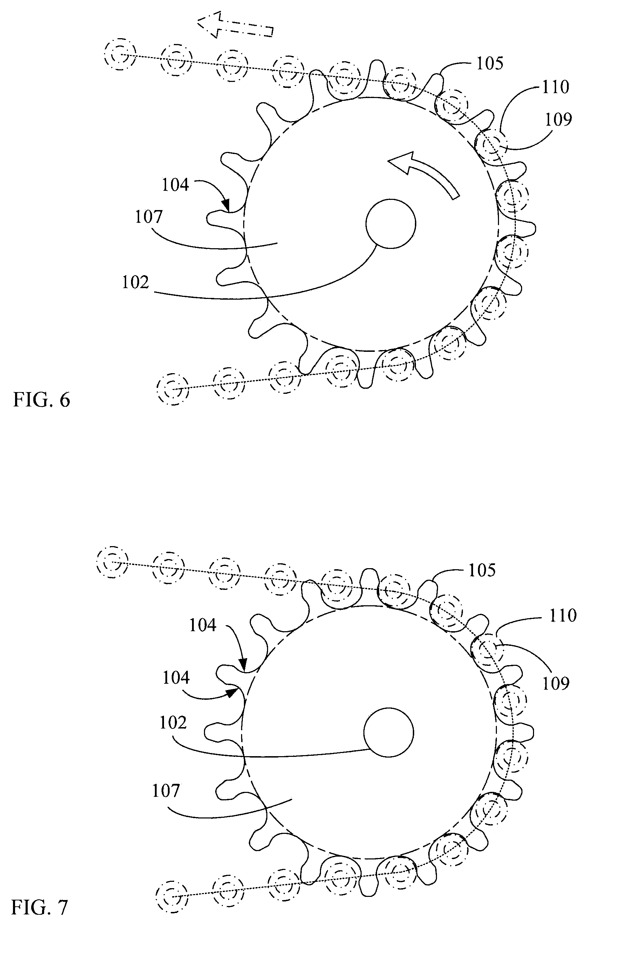

FIG. 6 is a schematic structural view illustrating the tooth shape of a unidirectional transmission anti-detachment chainwheel composed of an eccentric circular gear plate and formed with a forced recessed face at chain tooth root portion (104), according to the present invention;

As shown in FIG. 6, it mainly consists of:
-- eccentric circular gear plate (107): the periphery thereof is formed with chain teeth, the center thereof is formed with a mechanism in an aperture or shaft shape or chainwheel teeth having its outer circumference served for transmission for performing eccentric circular rotation thereby forming a rotation central interface (102), one main characteristic thereof is that a root is formed along the tooth peak (105) of chainwheel tooth and inwardly recessed as a chevron angled face, wherein one root portion on the face along the transmission forcing is formed with a forced recessed face at chain tooth root portion (104), thereby coupling the chain roller (110) sleeved on the chain connecting pivot shaft (109) to be tightly engaged at the forced recessed face at chain tooth root portion.

FIG. 7 is a schematic structural view illustrating the tooth shape of a bidirectional transmission anti-detachment chainwheel composed of an eccentric circular gear plate and formed with a forced recessed face at chain tooth root portion (104), according to the present invention;

As shown in FIG. 7, it mainly consists of:
-- eccentric circular gear plate (107): the periphery thereof is formed with chain teeth, the center thereof is formed with a mechanism in an aperture or shaft shape or chainwheel teeth having its outer circumference served for transmission for performing eccentric circular rotation thereby forming a rotation central interface (102), one main characteristic thereof is that a root is formed along the tooth peak (105) of chainwheel tooth and inwardly recessed as a chevron angled face, wherein two root portions on the face along the transmission forcing are respectively formed with a forced recessed face at chain tooth root portion (104), thereby coupling the chain roller (110) sleeved on the chain connecting pivot shaft (109) to be tightly engaged at the forced recessed face at chain tooth root portion.

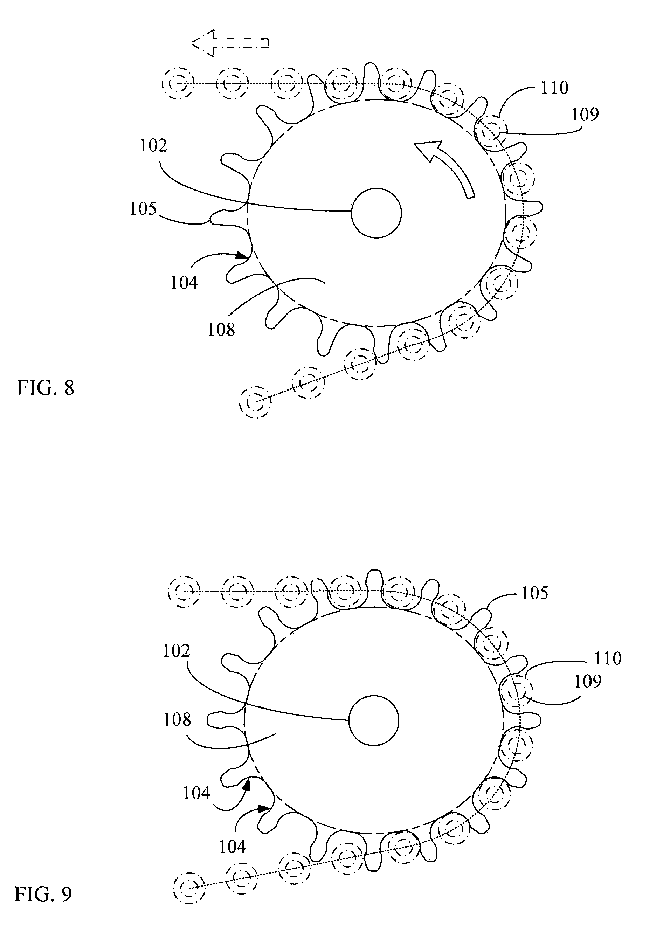

FIG. 8 is a schematic structural view illustrating the tooth shape of a unidirectional transmission anti-detachment chainwheel composed of an oval gear plate and formed with a forced recessed face at chain tooth root portion (104), according to the present invention;

As shown in FIG. 8, it mainly consists of:
-- oval gear plate (108): the periphery thereof is formed with chain teeth, the center thereof is formed with a mechanism in an aperture or shaft shape or chainwheel teeth having its outer circumference served for transmission for performing oval rotation thereby forming a rotation central interface (102), one main characteristic thereof is that a root is formed along the tooth peak (105) of chainwheel tooth and inwardly recessed as a chevron angled face, wherein one root portion on the face along the transmission forcing is formed with a forced recessed face at chain tooth root portion (104), thereby coupling the chain roller (110) sleeved on the chain connecting pivot shaft (109) to be tightly engaged at the forced recessed face at chain tooth root portion.

FIG. 9 is a schematic structural view illustrating the tooth shape of a bidirectional transmission anti-detachment chainwheel composed of an oval gear plate and formed with a forced recessed face at chain tooth root portion (104), according to the present invention;

As shown in FIG 9, it mainly consists of:
-- oval gear plate (108): the periphery thereof is formed with chain teeth, the center thereof is formed with a mechanism in an aperture or shaft shape or chainwheel teeth having its outer circumference served for transmission for performing oval rotation thereby forming a rotation central interface (102), one main characteristic thereof is that a root is formed along the tooth peak (105) of chainwheel tooth and inwardly recessed as a chevron angled face, wherein two root portions on the face along the transmission forcing are respectively formed with a forced recessed face at chain tooth root portion (104), thereby coupling the chain roller (110) sleeved on the chain connecting pivot shaft (109) to be tightly engaged at the forced recessed face at chain tooth root portion.

According to the anti-detachment chainwheel having forced recessed face at chain tooth root portion, an idle wheel having expanding or retracting force can be optionally adopted.

## Claims

1. An anti-detachment chainwheel having forced recessed face at chain tooth root portion, in which a chain roller (110) sleeved on a chain connecting pivot shaft (109) can be tightened engaged at a forced recessed face at chain tooth root portion (104) while the chainwheel being driven by a chain, thereby improving the shortage of the chain being easily detached from the chainwheel.

2. An anti-detachment chainwheel having forced recessed face at chain tooth root portion as claimed in claim 1, wherein the structure further includes that the tooth shape of a unidirectional transmission anti-detachment chainwheel composed of a right circular gear plate and formed with a forced recessed face at chain tooth root portion (104), and it mainly consists of:
-- right circular gear plate (101): the periphery thereof is formed with chain teeth, the center thereof is formed with a mechanism in an aperture or shaft shape or chainwheel teeth having its outer circumference served for transmission for performing right circular rotation thereby forming a rotation central interface (102), one main characteristic thereof is that a root is formed along the tooth peak (105) of chainwheel tooth and inwardly recessed as a chevron angled face, wherein one root portion on the face along the transmission forcing is formed with a forced recessed face at chain tooth root portion (104), thereby coupling the chain roller (110) sleeved on the chain connecting pivot shaft (109) to be tightly engaged at the forced recessed face at chain tooth root portion.

3. An anti-detachment chainwheel having forced recessed face at chain tooth root portion as claimed in claim 1, wherein the structure further includes that the tooth shape of a bidirectional transmission anti-detachment chainwheel composed of a right circular gear plate and formed with a forced recessed face at chain tooth root portion (104), and it mainly consists of:
-- right circular gear plate (101): the periphery thereof is formed with chain teeth, the center thereof is formed with a mechanism in an aperture or shaft shape or chainwheel teeth having its outer circumference served for transmission for performing right circular rotation thereby forming a rotation central interface (102), one main characteristic thereof is that a root is formed along the tooth peak (105) of chainwheel tooth and inwardly recessed as a chevron angled face, wherein two root portions on the face along the transmission forcing are respectively formed with a forced recessed face at chain tooth root portion (104), thereby coupling the chain roller (110) sleeved on the chain connecting pivot shaft (109) to be tightly engaged at the forced recessed face at chain tooth root portion.

4. An anti-detachment chainwheel having forced recessed face at chain tooth root portion as claimed in claim 1, wherein the structure further includes that the tooth shape of a unidirectional transmission anti-detachment chainwheel composed of an eccentric circular gear plate and formed with a forced recessed face at chain tooth root portion (104), and it mainly consists of:
-- eccentric circular gear plate (107): the periphery thereof is formed with chain teeth, the center thereof is formed with a mechanism in an aperture or shaft shape or chainwheel teeth having its outer circumference served for transmission for performing eccentric circular rotation thereby forming a rotation central interface (102), one main characteristic thereof is that a root is formed along the tooth peak (105) of chainwheel tooth and inwardly recessed as a chevron angled face, wherein one root portion on the face along the transmission forcing is formed with a forced recessed face at chain tooth root portion (104), thereby coupling the chain roller (110) sleeved on the chain connecting pivot shaft (109) to be tightly engaged at the forced recessed face at chain tooth root portion.

5. An anti-detachment chainwheel having forced recessed face at chain tooth root portion as claimed in claim 1, wherein the structure further includes that the tooth shape of a bidirectional transmission anti-detachment chainwheel composed of an eccentric circular gear plate and formed with a forced recessed face at chain tooth root portion (104), and it mainly consists of:
-- eccentric circular gear plate (107): the periphery thereof is formed with chain teeth, the center thereof is formed with a mechanism in an aperture or shaft shape or chainwheel teeth having its outer circumference served for transmission for performing eccentric circular rotation thereby forming a rotation central interface (102), one main characteristic thereof is that a root is formed along the tooth peak (105) of chainwheel tooth and inwardly recessed as a chevron angled face, wherein two root portions on the face along the transmission forcing are respectively formed with a forced recessed face at chain tooth root portion (104), thereby coupling the chain roller (110) sleeved on the chain connecting pivot shaft (109) to be tightly engaged at the forced recessed face at chain tooth root portion.

6. An anti-detachment chainwheel having forced recessed face at chain tooth root portion as claimed in claim 1, wherein the structure further includes that the tooth shape of a unidirectional transmission anti-detachment chainwheel composed of an oval gear plate and formed with a forced recessed face at chain tooth root portion (104), and it mainly consists of:
-- oval gear plate (108): the periphery thereof is formed with chain teeth, the center thereof is formed with a mechanism in an aperture or shaft shape or chainwheel teeth having its outer circumference served for transmission for performing oval rotation thereby forming a rotation central interface (102), one main characteristic thereof is that a root is formed along the tooth peak (105) of chainwheel tooth and inwardly recessed as a chevron angled face, wherein one root portion on the face along the transmission forcing is formed with a forced recessed face at chain tooth root portion (104), thereby coupling the chain roller (110) sleeved on the chain connecting pivot shaft (109) to be tightly engaged at the forced recessed face at chain tooth root portion.

7. An anti-detachment chainwheel having forced recessed face at chain tooth root portion as claimed in claim 1, wherein the structure further includes that the tooth shape of a bidirectional transmission anti-detachment chainwheel composed of an oval gear plate and formed with a forced recessed face at chain tooth root portion (104), and it mainly consists of:
-- oval gear plate (108): the periphery thereof is formed with chain teeth, the center thereof is formed with a mechanism in an aperture or shaft shape or chainwheel teeth having its outer circumference served for transmission for performing oval rotation thereby forming a rotation central interface (102), one main characteristic thereof is that a root is formed along the tooth peak (105) of chainwheel tooth and inwardly recessed as a chevron angled face, wherein two root portions on the face along the transmission forcing are respectively formed with a forced recessed face at chain tooth root portion (104), thereby coupling the chain roller (110) sleeved on the chain connecting pivot shaft (109) to be tightly engaged at the forced recessed face at chain tooth root portion.
